# EUROPÄISCHE PATENTSCHRIFT

(11) **EP 3 713 811 B1**
(45) Veröffentlichungstag und Bekanntmachung des Hinweises auf die Patenterteilung: **06.07.2022**
(21) Anmeldenummer: 18811173.6
(22) Anmeldetag: 21.11.2018
(51) Int. Cl.: B62D 1/16, B62D 1/185, B62D 1/20

(54) **LENKWELLE FÜR EIN KRAFTFAHRZEUG**
STEERING SHAFT FOR A MOTOR VEHICLE
ARBE DE DIRECTION POUR VÉHICULE AUTOMOBILE

(30) Priorität: 24.11.2017 DE 102017221075
(43) Veröffentlichungstag der Anmeldung: 30.09.2020
(73) Patentinhaber: thyssenkrupp Presta AG, 9492 Eschen (LI); thyssenkrupp AG, 45143 Essen (DE)
(72) Erfinder: PÄKEL, Florian, 9493 Mauren (LI); SCHEIDBACH, Alexander, 6841 Mäder (AT); WÖRLE, Mike, 3047 Bremgarten bei Bern (CH)
(74) Vertreter: thyssenkrupp Intellectual Property GmbH
(86) Internationale Anmeldenummer: PCT/EP2018/082042
(87) Internationale Veröffentlichungsnummer: WO 2019/101782

(56) Entgegenhaltungen:
- EP-A2- 1 136 341
- DE-A1- 2 431 388

## Beschreibung

Die Erfindung betrifft eine Lenkwelle für ein Kraftfahrzeug, mit einer hohlen Außenwelle, in der eine Innenwelle drehmomentschlüssig und axial verschiebbar aufgenommen ist, wobei ein elastischer Faltenbalg mit der Innenwelle oder der Außenwelle verbunden ist wobei der Faltenbalg zumindest teilweise innerhalb der Lenkwelle angeordnet ist.

Aus der JP 2013 117 271A ist bekannt, den teleskopierbaren Bereich zwischen der Innenwelle und der Außenwelle gegen Schmutz und Feuchtigkeit zu schützen, indem sowohl die Innenwelle gegenüber der Außenwelle als auch der Innenraum der Innenwelle gegenüber dem Außenbereich durch einen Stopfen abgeschlossen ist. Diese Maßnahme hat den Nachteil, dass bei einer Teleskopierbewegung der Innenwelle und Außenwelle Druckunterschiede im Innenraum der Welle erzeugt werden, wie dies beispielsweise von einer Luftpumpe bekannt ist. Diese Druckunterschiede beeinflussen die Verschiebekraft nachteilig und führen zu störenden Geräuschen.

Eine Lenkwelle der eingangs genannten Art ist in der DE 24 31 388 A1 beschrieben. Nachteilig daran ist der unzureichende Druckausgleich beim axialen Verschieben von Innenwelle und Außenwelle.

Aufgabe der vorliegenden Erfindung ist es, eine Lenkwelle für ein Kraftfahrzeug anzugeben, die gegen Eindringen von Schmutz und Feuchtigkeit geschützt ist und gleichzeitig eine gleichmäßige Verschiebekraft aufweist und geräuscharm verstellbar ist.

Gelöst wird die Aufgabe durch die kennzeichnenden Merkmale des Patentanspruchs 1. Vorteilhafte Ausführungsformen sind in den Unteransprüchen beschrieben.

Gemäß der Erfindung ist der Faltenbalg im Inneren der Innenwelle angeordnet, wobei der Faltenbalg einen Koppelabschnitt aufweist, der an einer Innenseite der Innenwelle befestigt ist.

Bei der Erfindung ist der Faltenbalg im Inneren der Innenwelle angeordnet, wobei der Faltenbalg einen Koppelabschnitt aufweist, der an einer Innenseite der Innenwelle befestigt ist. Die Innenwelle ist zumindest teilweise hohl ausgebildet, wobei der Innenraum der Innenwelle bei herkömmlichen Lenkwellen nicht genutzt wird und lediglich der Massenreduktion dient. Dadurch benötigt die erfindungsgemäße Maßnahme keinerlei zusätzlichen Bauraum.

Dank des zumindest teilweise innerhalb der Lenkwelle angeordneten Faltenbalgs, ist die Lenkwelle an zumindest einem ihrer Enden gegen das Eindringen von Schmutz und Feuchtigkeit geschützt. Gleichzeitig werden die bei der Verstellung der Länge der Lenkwelle in Axialrichtung, d.h. in Richtung der Längsachse der Lenkwelle, durch Teleskopieren der Außenwelle auf der Innenwelle auftretende Luftdruckänderungen durch eine entsprechende Volumenveränderung des Faltenbalgs ausgeglichen. Werden beispielsweise Außenwelle und Innenwelle ineinander teleskopiert, so verringert sich das Volumen ihres gemeinsamen Innenraums, was ohne den erfindungsgemäßen Druckausgleich zu einem Druckanstieg führen würde, wobei der Druckanstieg nach der Teleskopierbewegung nur langsam oder gar nicht ausgeglichen werden würde. Bei der erfindungsgemäßen Lenkwelle jedoch wird der Faltenbalg zusammengeschoben, so dass sich das vom Faltenbalg eingenommene Volumen des Innenraums der Innenwelle verkleinert und das mit Luft gefüllte Volumen des Innenraums vergrößert. Dabei tritt die im Innenraum des Faltenbalgs befindliche Luft in den Außenbereich aus. Der Faltenbalg ermöglicht somit einen Druckausgleich, wie er sich auch mit einem offenen Ende der Innenwelle ohne Faltenbalg ergeben würde, schließt dabei aber dennoch den Innenraum der Lenkwelle zumindest an einem Ende der Lenkwelle gegenüber der Umgebung ab.

In vorteilhafter Ausgestaltung der Erfindung ist der Faltenbalg vollständig im Inneren der Lenkwelle angeordnet, wodurch kein Bauraum außerhalb der Lenkwelle benötigt wird.

In vorteilhafter Weise weist der Faltenbalg ein freies Ende auf, wobei das freie Ende geschlossen ausgestaltet ist. Ein geschlossenes Ende des Faltenbalgs kann bereits bei seiner Fertigung mit eingeformt werden, so dass ein Stopfen oder sonstiger Verschluss seines freien Endes mit Vorteil entfallen kann.

In einer bevorzugten Ausführungsform der Erfindung wird die Dichtigkeit der Lenkwelle dadurch verbessert, dass eine Öffnung im lenkradseitigen Ende der Außenwelle durch einen Stopfen verschlossen ist.

In weiterer vorteilhafter Ausgestaltung der Erfindung ist vorgesehen, dass der Koppelabschnitt ein Querschnittsprofil aufweist, das mit einem Querschnittsprofil der Innenseite der Innenwelle korrespondiert. Diese Maßnahme gewährleistet, dass sich die Außenflächen des Faltenbalgs im Bereich seines Koppelabschnitts an die Innenwand der Innenwelle anschmiegen und den Innenraum der Innenwelle abschließen können.

Die Dichtwirkung der letztgenannten Maßnahme kann mit Vorteil noch verbessert werden, indem innerhalb des Koppelabschnitts des Faltenbalgs eine Stützhülse mit einem an das Querschnittsprofil des Koppelabschnitts angepassten Querschnittsprofil angeordnet ist, die den elastischen Faltenbalg von innen gegen die Innenseite der Innenwelle drückt. Hierdurch wird ein besonders sicherer Sitz des Faltenbalgs an der Innenwelle verwirklicht.

Mit Vorteil ist der Faltenbalg einstückig aus einem Elastomer gebildet, vorzugsweise aus Gummi oder einem thermoplastischen Elastomer. Auf diese Weise kann sowohl der Verschluss seines freien Endes als auch das spezielle Profil seines Koppelabschnitts einstückig mit dem eigentlichen Faltenbalg-Bereich mit einem kostengünstigen und einfachen Fertigungsverfahren hergestellt werden. Hierdurch werden die Herstellung mehrerer Einzelteile und deren Montage eingespart.

In weiterer vorteilhafter Ausgestaltung der Erfindung ist ein äußerer Faltenbalg vorgesehen, dessen erstes Ende einen ersten Abschnitt des Umfangsbereichs der Innenwelle umschließt und dessen zweites Ende einen Abschnitt des Umfangsbereichs der Außenwelle umschließt. Durch diesen Faltenbalg wird der teleskopierbare Bereich zwischen Innenwelle und Außenwelle gegenüber Umwelteinflüssen abgeschlossen. Der Faltenbalg kann im Wesentlichen gasdicht ausgebildet und mit Innen- und Außenwelle verbunden sein, um den Eintritt von Gas, Dampf und Feinpartikeln zu verringern bzw. zu verhindern.

Bevorzugt ist der äußere Faltenbalg mittels einer ersten Schelle auf der Innenwelle und mittels einer zweiten Schelle auf der Außenwelle festgelegt.

Die Schelle kann bevorzugt als zusammenspannbare Schlauchschelle oder als Ohrschelle ausgebildet sein. Alternativ zu einer Schelle kann auch ein Ratsch-Band dienen.

Um ein reibungsarmes und gleichmäßiges Gleiten der Außenwelle auf der Innenwelle zu gewährleisten wird vorgeschlagen, dass zwischen einem Endabschnitt des Umfangsbereichs der Innenwelle und der Innenwand der Außenwelle eine Profilhülse oder eine Gleitbeschichtung angeordnet ist. Alternativ kann auch eine Kombination aus Profilhülse und einer Gleitbeschichtung vorgesehen sein.

Ein Ausführungsbeispiel der Erfindung wird nachfolgend anhand der Zeichnungen näher erläutert. Die Figuren zeigen im Einzelnen:
- Figur 1:: eine schematische Darstellung einer Lenkvorrichtung für Kraftfahrzeuge mit einer mehrteiligen teleskopierbaren Lenkwelle;
- Figur 2 :: eine perspektivische Ansicht eines Teils der Lenkwelle mit einem aus Außenwelle und Innenwelle bestehenden Teilabschnitt;
- Figur 3 :: eine perspektivische Darstellung von Außenwelle, Innenwelle und Faltenbalg vor dem Zusammenbau;
- Figur 4:: eine geschnittene Darstellung von Außenwelle, Innenwelle und Faltenbalg nach dem Zusammenbau;

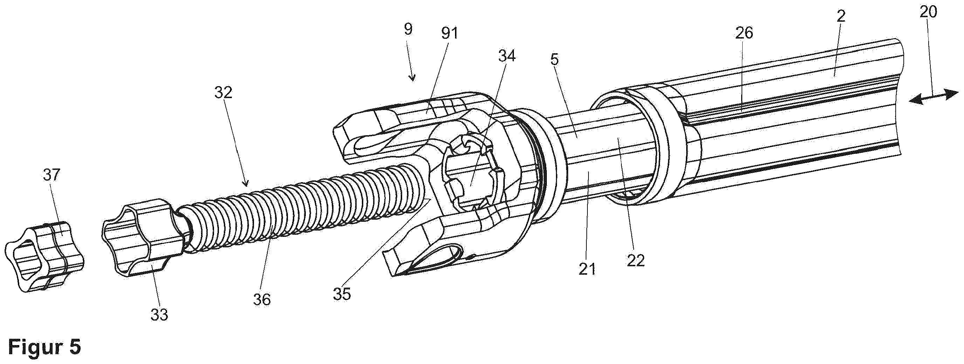

- Figur 5 :: eine perspektivische Darstellung vor der Montage des Faltenbalgs im Inneren der Innenwelle.

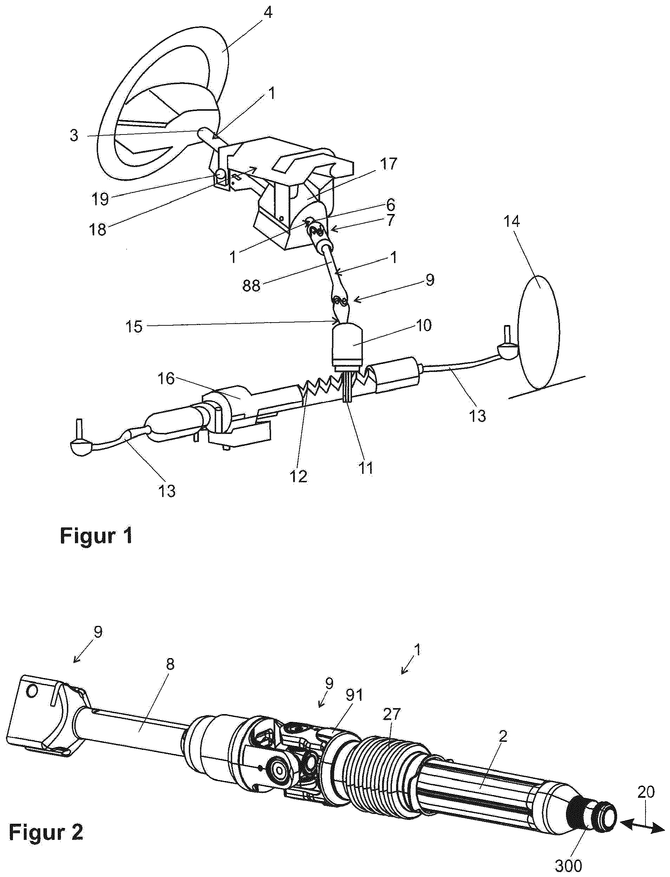

In Figur 1 ist eine Lenkvorrichtung für ein Kraftfahrzeug dargestellt, bei der eine aus mehreren Teilen bestehende Lenkwelle 1 mit dem lenkradseitigen Ende 3 mit dem Lenkrad 4 verbunden ist. Die Lenkwelle 1 weist ein als Universalgelenk ausgebildetes Drehgelenk 7 auf, welches mit einem weiteren Wellenteil 88 der Lenkwelle 1 verbunden. Das Wellenteil 88 ist über ein weiteres als Universalgelenk ausgebildetes Drehgelenk 9 mit einer Eingangswelle 15 eines Lenkgetriebes 10 verbunden. Ein Ritzel 11 des Lenkgetriebes 10 wirkt mit einer Zahnstange 12 zusammen, so dass bei einer Drehung des Lenkrads 4 eine seitliche Linearverschiebung der Zahnstange 12 resultiert, so dass die rotarische Bewegung der Lenkwelle 1 in eine translatorische Bewegung der Zahnstange 12 überführt wird. Die Zahnstange 12 ist an beiden Enden über Spurstangen 13 mit den gelenkten Fahrzeugrädern 14 verbunden, die mittels der Spurstangen 13 verschwenkbar sind. In einem Gehäuse 16 ist eine elektromechanische Lenkkraftunterstützung untergebracht.

Die Lenkwelle 1 ist in einem Führungskasten 17 gelagert. Der Führungskasten 17 ist an einem mit dem Fahrzeugchassis fest verbundenen Trägerteil 18 schwenkbar befestigt, so dass die Lenksäule 4 nach oben oder unten geschwenkt werden kann. Durch eine Arretiervorrichtung 19 kann der Führungskasten 17 arretiert werden, so dass die Höhenverstellung des Lenkrads 4 blockiert ist. Außerdem wird durch die Arretiervorrichtung 19 auch die Verstellbarkeit des Lenkrads 4 in Axialrichtung blockiert. Um das Lenkrad 4 in Axialrichtung oder in der Höhe einzustellen, kann der Fahrer die Arretiervorrichtung 19 manuell lösen und nach dem Einstellen in seiner bevorzugten Lenkradposition wieder arretieren.

In der Figur 2 ist ein Teil der Lenkwelle 1 in einer perspektivischen Ansicht dargestellt.

Die Lenkwelle 1 umfasst eine Innenwelle 5 und eine Außenwelle 6, wobei diese drehmomentenschlüssig ineinander greifen. Die Innenwelle 5 weist ein äußeres, von einer kreiszylindrischen Form abweichendes Querschnittsprofil auf, welches unter Zwischenschaltung einer Profilhülse 23 in ein zum Querschnittsprofil der Innenwelle 5 korrespondierendes inneres Querschnittsprofil der Außenwelle 2 formschlüssig eingreift. Die Innenwelle 5 ist drehmomentenschlüssig mit einer Gabel 91 des Universalgelenks 9 gekoppelt. Die Außenwelle 2 weist einen Verbindungsabschnitt 300 auf, der mit einer Gabel des Universalgelenks 7 koppelbar ist.

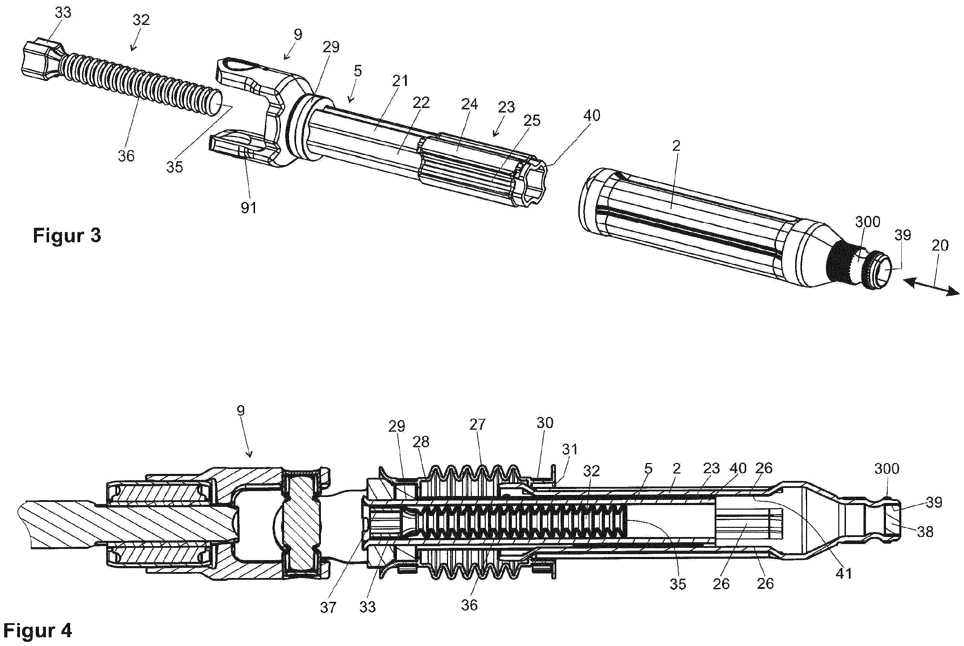

Wie man am besten in den Figuren 3 und 4 erkennt, wird eine Längsverstellung der Lenkwelle 1 in Axialrichtung 20 dadurch ermöglicht, dass die Außenwelle 2 auf der Innenwelle 5 in Axialrichtung 20 verschiebbar, in Drehrichtung aber drehmomentschlüssig angeordnet ist. Dies wird ermöglicht durch eine spezielle Formgebung der Querschnittsprofile von Außenwelle 2 und Innenwelle 5. Sowohl die Außenwelle 2 als auch die Innenwelle 5 sind als Hohlwellen ausgestaltet. Die Innenwelle 5 weist ein kleeblattähnliches Querschnittsprofil auf, welches man am besten in Figur 3 erkennen kann. Dadurch umfasst die Innenwelle 5 vier radial nach außen ragende Vorsprünge 21, die sich in Axialrichtung 20 erstrecken. Die vier radialen Vorsprünge 21 sind über den Umfang der Innenwelle 5 verteilt angeordnet, so dass sie zwischen sich vier radiale Vertiefungen 22 einschließen, die abwechselnd mit den radialen Vorsprüngen 21 über den Umfang der Innenwelle 5 verteilt angeordnet sind. Alternativ zum kleeblattähnliches Querschnittsprofil kann auch eine Verzahnung oder ein Keilwellenprofil vorgesehen sein.

Auf einem Endabschnitt 40 der Innenwelle 5 ist eine Profilhülse 23 angeordnet. Die Profilhülse 23 hat ebenfalls ein kleeblattähnliches Querschnittsprofil mit vier radialen nach außen ragenden Vorsprüngen 24 und vier abwechselnd mit den radialen Vorsprüngen 24 angeordnete radiale Vertiefungen 25, die sich über die gesamte Länge der Profilhülse 23 erstrecken.

Die Außenwelle 2 hat an ihrer Innenwand 41 radial nach innen ragende Innenvorsprünge 26, welche in die radialen Vertiefungen 25 der Profilhülse 23 eingreifen. Infolge des Eingreifens der Innenvorsprünge 26 der Außenwelle 2 in die radialen Vertiefungen 25 der Profilhülse 23 und des Eingreifens der radialen Vorsprünge 21 der Innenwelle 5 in die auf der Innenseite der radialen Vorsprünge 24 der Profilhülse 23 gebildeten Vertiefungen wird ein Verdrehen der Innenwelle 5 gegenüber der Außenwelle 2 verhindert, so dass Innenwelle 5 und Außenwelle 2 drehmomentschlüssig miteinander verbunden sind. Trotzdem kann die Außenwelle 2 gegenüber der Innenwelle 5 in Axialrichtung 20 verschoben werden. Dabei dient die Profilhülse 23 zur Verringerung des wirksamen Reibkoeffizienten zwischen der Innenwand 41 der Außenwelle 2 und der Profilhülse 23 während der gegenseitigen Verschiebung in Axialrichtung 20. Vorzugsweise besteht die Profilhülse 23 aus Kunststoff mit günstigen Gleitreibungseigenschaften. Statt der Profilhülse 23 kann aber auch der Endabschnitt 40 der Außenseite der Innenwelle 5 oder die Innenwand 41 der Außenwelle 2 mit einer Gleitbeschichtung versehen werden oder es können zwischen Innenwelle 5 und Außenwelle 2 Wälzkörper angeordnet sein.

Zum Abschluss des axialen Teleskopierbereichs zwischen der Innenwelle 5 und der Außenwelle 2 ist ein äußerer Faltenbalg 27 vorgesehen, der als Gummibalg ausgestaltet ist. Ein erstes Ende 28 des äußeren Faltenbalgs 27 ist mit einem ersten Abschnitt 29 des Umfangsbereichs Gabel 91 und somit mit der Innenwelle 5 verbunden. Ein zweites Ende 30 des Faltenbalgs 27 ist mit einem Abschnitt des Umfangsbereichs 31 der Außenwelle 2 verbunden. Dabei umschließt der äußere Faltenbalg 27 sowohl ein Stück der Außenwelle 2 als auch ein Stück der Innenwelle 5.

Ein Faltenbalg 32, der als Druckausgleichs-Faltenbalg ausgebildet ist, ist im Inneren der Lenkwelle 1, und zwar im Inneren der Innenwelle 5 angeordnet. Ein Koppelabschnitt 33 des Faltenbalgs 32 ist an der Innenseite 34 der Innenwelle 5 befestigt. Ein freies Ende 35 des Faltenbalgs 32 ist gegenüber dem Außenbereich luftdicht abgeschlossen, indem der Faltenbalg 32 an seinem freien Ende 35 geschlossen ausgestaltet ist. Der Faltenbalg 32 ist im Bereich des Koppelabschnitts 33 an das Querschnittsprofil der Innenseite 34 der Innenwelle 5 angepasst. Beide Querschnittsprofile sind Kleeblatt-ähnlich ausgestaltet. Der Druckausgleichs-Faltenbalg 32 umfasst ein elastisches Material, im vorliegenden Ausführungsbeispiel ist der Faltenbalg 32 aus einem Elastomer gebildet. Der Faltenbalg 32 wird in einem einzigen Arbeitsgang einstückig aus dem Gummimaterial ausgeformt, wobei insbesondere sein balgförmiger Mittelabschnitt 36, sein geschlossenes freies Ende 35 und sein im Querschnittsprofil kleeblattförmiger Koppelabschnitt 33 ausgeformt werden. Zur besseren Fixierung des Koppelabschnitts 33 des Faltenbalgs 32 an der Innenseite 34 der Innenwelle 5 ist eine Stützhülse 37 vorgesehen, die ein an das Querschnittsprofil des Faltenbalgs 32 angepasstes kleeblattähnliches Querschnittsprofil aufweist. Die Stützhülse 37 ist bevorzugt aus einem steiferen und/oder festeren Material als der Faltenbalg 32 ausgebildet. Die Stützhülse 37 drückt den elastischen Faltenbalg 32 von Innen gegen die Innenseite 34 der Innenwelle 5, wodurch das feste Ende 33 gegenüber der Innenwelle 5 abschließt.

Der balgförmige Mittelabschnitt 36 des Faltenbalgs 32 weist einen im Längsschnitt gesehenen mäanderförmigen Querschnitt auf, d.h. in einem Schnitt, der parallel zur Axialrichtung 20 ausgerichtet ist. Eine Öffnung 39 im Verbindungsabschnitt 300 der Außenwelle 2 ist durch einen Stopfen 38 aus einem elastischen Material gegenüber dem Außenraum bzw. der Umwelt abgedichtet.

Mit dem abdichtenden Stopfen 38, der Außenwelle 2 selbst, dem die Außenwelle 2 gegenüber der Innenwelle 5 abdichtenden äußeren Faltenbalg 27, der Innenwelle 5 selbst und dem die Innenseite 34 der Innenwelle 5 abdichtenden Koppelabschnitt 33 des Faltenbalgs 32 mit seinem geschlossenen freien Ende 35 wird eine gegen Verunreinigungen und eindringende Feuchtigkeit gesicherte und in Axialrichtung telekopierbare Lenkwelle geschaffen, die bei der Verstellung der Innenwelle 5 gegenüber der Außenwelle 2 einen Druckausgleich gewährleistet, indem der Faltenbalg 32 expandiert oder sich zusammenzieht.

## Patentansprüche

1. Lenkwelle (1) für ein Kraftfahrzeug, mit einer hohlen Außenwelle (2), in der eine Innenwelle (5) drehmomentschlüssig und axial verschiebbar aufgenommen ist, wobei ein elastischer Faltenbalg (32) mit der Innenwelle (5) oder der Außenwelle (2) verbunden ist, wobei der Faltenbalg (32) zumindest teilweise innerhalb der Lenkwelle (1) angeordnet ist, **dadurch gekennzeichnet, dass** der Faltenbalg (32) im Inneren der Innenwelle (5) angeordnet ist, wobei der Faltenbalg (32) einen Koppelabschnitt (33) aufweist, der an einer Innenseite (34) der Innenwelle (5) befestigt ist.

2. Lenkwelle nach Anspruch 1, **dadurch gekennzeichnet, dass** der Faltenbalg (32) ein freies Ende (35) aufweist, wobei das freie Ende (35) geschlossen ausgestaltet ist.

3. Lenkwelle nach einem der vorhergehenden Ansprüche, **dadurch gekennzeichnet, dass** eine Öffnung (39) im lenkradseitigen Ende (3) der Außenwelle (2) durch einen Stopfen (38) verschlossen ist.

4. Lenkwelle nach einem der vorhergehenden Ansprüche, **dadurch gekennzeichnet, dass** der Koppelabschnitt (33) ein Querschnittsprofil aufweist, dass mit einem Querschnittsprofil der Innenseite (34) der Innenwelle (5) korrespondiert.

5. Lenkwelle nach Anspruch 4, **dadurch gekennzeichnet, dass** innerhalb des Koppelabschnitts (33) des Faltenbalgs (32) eine Stützhülse (37) mit einem an das Querschnittsprofil des Koppelabschnitts (33) angepassten Querschnittsprofil angeordnet ist, die den elastischen Faltenbalg (32) von innen gegen die Innenseite (34) der Innenwelle (5) drückt.

6. Lenkwelle nach einem der vorhergehenden Ansprüche, **dadurch gekennzeichnet, dass** der Faltenbalg (32) einstückig aus Elastomer gebildet ist.

7. Lenkwelle nach einem der vorhergehenden Ansprüche, **dadurch gekennzeichnet, dass** ein äußerer Faltenbalg (27) vorgesehen ist, dessen erstes Ende (28) einen ersten Abschnitt (29) des Umfangsbereichs der Innenwelle (5) umschließt und dessen zweites Ende (30) einen Abschnitt des Umfangsbereichs (31) der Außenwelle (2) umschließt.

8. Lenkwelle nach einem der vorhergehenden Ansprüche, **dadurch gekennzeichnet, dass** zwischen einem Endabschnitt (40) des Umfangsbereichs der Innenwelle (5) und der Innenwand (41) der Außenwelle (2) eine Profilhülse (23) oder eine Gleitbeschichtung angeordnet ist.

## Claims

1. A steering shaft (1) for a motor vehicle, with a hollow outer shaft (2), in which an inner shaft (5) is received in a torque-transmitting and axially displaceable manner, an elastic boot (32) being connected to the inner shaft (5) or the outer shaft (2), wherein the boot (32) is arranged at least partially within the steering shaft (1), **characterized in that** the boot (32) is arranged in the interior of the inner shaft (5), the boot (32) having a coupling section (33) which is fastened to an inner side (34) of the inner shaft (5).

2. The steering shaft as claimed in claim 1, **characterized in that** the boot (32) has a free end (35), the free end (35) being of closed configuration.

3. The steering shaft as claimed in one of the preceding claims, **characterized in that** an opening (39) in the steering wheel-side end (3) of the outer shaft (2) is closed by way of a plug (38).

4. The steering shaft as claimed in one of the preceding claims, **characterized in that** the coupling section (33) has a cross-sectional profile that corresponds with a cross-sectional profile of the inner side (34) of the inner shaft (5).

5. The steering shaft as claimed in claim 4, **characterized in that** a supporting sleeve (37) with a cross-sectional profile which is adapted to the cross-sectional profile of the coupling section (33) is arranged within the coupling section (33) of the boot (32), which supporting sleeve (37) presses the elastic boot (32) from the inside against the inner side (34) of the inner shaft (5).

6. The steering shaft as claimed in one of the preceding claims, **characterized in that** the boot (32) is formed in one piece from elastomer.

7. The steering shaft as claimed in one of the preceding claims, **characterized in that** an outer boot (27) is provided, the first end (28) of which encloses a first section (29) of the circumferential region of the inner shaft (5), and the second end (30) of which encloses a section of the circumferential region (31) of the outer shaft (2).

8. The steering shaft as claimed in one of the preceding claims, **characterized in that** a profiled sleeve (23) or a sliding coating is arranged between an end section (40) of the circumferential region of the inner shaft (5) and the inner wall (41) of the outer shaft (2).

## Revendications

1. Arbre de direction (1) pour un véhicule automobile, comprenant un arbre extérieur creux (2), dans lequel un arbre intérieur (5) est logé avec transmission de couple et de manière à pouvoir être déplacé axialement, un soufflet élastique (32) étant relié à l'arbre intérieur (5) ou à l'arbre extérieur (2), le soufflet (32) étant agencé au moins partiellement à l'intérieur de l'arbre de direction (1), **caractérisé en ce que** le soufflet (32) est agencé à l'intérieur de l'arbre intérieur (5), le soufflet (32) présentant une section de couplage (33) qui est fixée à un côté intérieur (34) de l'arbre intérieur (5) .

2. Arbre de direction selon la revendication 1, **caractérisé en ce que** le soufflet (32) présente une extrémité libre (35), l'extrémité libre (35) étant configurée sous forme fermée.

3. Arbre de direction selon l'une quelconque des revendications précédentes, **caractérisé en ce qu'**une ouverture (39) dans l'extrémité côté volant de direction (3) de l'arbre extérieur (2) est fermée par un bouchon (38).

4. Arbre de direction selon l'une quelconque des revendications précédentes, **caractérisé en ce que** la section de couplage (33) présente un profil de section transversale qui correspond à un profil de section transversale du côté intérieur (34) de l'arbre intérieur (5).

5. Arbre de direction selon la revendication 4, **caractérisé en ce qu'**à l'intérieur de la section de couplage (33) du soufflet (32) est agencé un manchon de support (37) ayant un profil de section transversale adapté au profil de section transversale de la section de couplage (33), qui presse le soufflet élastique (32) de l'intérieur contre le côté intérieur (34) de l'arbre intérieur (5).

6. Arbre de direction selon l'une quelconque des revendications précédentes, **caractérisé en ce que** le soufflet (32) est formé d'une seule pièce en élastomère.

7. Arbre de direction selon l'une quelconque des revendications précédentes, **caractérisé en ce qu'**un soufflet extérieur (27) est prévu, dont la première extrémité (28) entoure une première section (29) de la zone périphérique de l'arbre intérieur (5) et dont la deuxième extrémité (30) entoure une section de la zone périphérique (31) de l'arbre extérieur (2).

8. Arbre de direction selon l'une quelconque des revendications précédentes, **caractérisé en ce qu'**entre une section d'extrémité (40) de la zone périphérique de l'arbre intérieur (5) et la paroi intérieure (41) de l'arbre extérieur (2) est agencé un manchon profilé (23) ou un revêtement de glissement.
